# EUROPÄISCHE PATENTSCHRIFT

(11) **EP 0 478 905 B1**
(45) Veröffentlichungstag und Bekanntmachung des Hinweises auf die Patenterteilung: **19.04.1995**
(21) Anmeldenummer: 91111735.6
(22) Anmeldetag: 15.07.1991
(51) Int. Cl.: G01N 35/10, B01L 3/14

(54) **Vorrichtung zur Einführung von Pipettiereinsätzen durch Probegefäss-Stopfen**
Device for introducing pipetting inserts through the stoppers of sample containers
Appareil pour introduire des pièces d'insertion pour pipettes à travers les bouchons des récipients d'échantillonnage

(30) Priorität: 02.10.1990 CH 3166/90
(43) Veröffentlichungstag der Anmeldung: 08.04.1992
(73) Patentinhaber: F. HOFFMANN-LA ROCHE AG, 4002 Basel (CH)
(72) Erfinder: Stettler, Ueli, CH-5643 Sins (CH)
(74) Vertreter: Ventocilla, Abraham

(56) Entgegenhaltungen:
- EP-A- 0 269 561
- WO-A-89/12829
- FR-A- 2 395 941
- US-A- 4 938 929

## Beschreibung

Die Erfindung betrifft eine Vorrichtung zur automatischen Einführung eines Pipettiereinsätzes durch den Stopfen eines damit verschlossenen Probegefässes, das eine Probe enthält.

Eine Vorrichtung dieser Art ist aus der EP-A0 269 561 bekannt. Bei der Verwendung dieser Vorrichtung wird ein Pipettiereinsatz mittels eines Druckdorns in den Stopfen des Probegefässes eingesetzt. Diese Vorrichtung hat den Nachteil, dass je nach Beschaffenheit des Materials des Stopfens die davon unabhängige, konstante Druckkraft, die vom Druckdorn auf dem Pipettiereinsatz bei dessen Einführung in den Stopfen ausgeübt wird, nicht ausreicht, um den Pipettiereinsatz vollständig oder wenigstens tief genug in den Stopfen einzusetzen. Die bei der Einführung des Pipettiereinsatzes in Stopfen verursachte elastische Deformation des Stopfens bildet sich nach Wegfall des Druckes auf den Pipettiereinsatzes mehr oder weniger zurück und neigt dazu, den Pipettiereinsatz aus dem Stopfen zu verdrängen. Eine dadurch bewirkte, unvollständige Einführung des Pipettiereinsatzes in den Stopfen stellt die Zuverlässigkeit der Vorrichtung zur Einführung der Pipettiereinsätze in Frage.

Der Erfindung liegt daher die Aufgabe zugrunde, die vollständige Einführung des Pipettiereinsatzes in den Stopfen jedes Probegefässes sicherzustellen.

Erfindungsgemäss wird diese Aufgabe mit einer Vorrichtung der eingangs genannten Art gelöst, die folgende Komponenten enthält:
(a) eine Einzugseinrichtung, die einzelne, mit einem Stopfen verschlossene Probegefässe nacheinander aufnimmt und in einer vorbestimmten Lage positioniert,
(b) eine Zufuhreinrichtung, die einzelne Pipettiereinsätze nacheinander zu einer Abgabestelle bringt,
(c) eine von einer Antriebseinrichtung bewegbare Einpresseinrichtung, die einen Druckdorn, enthält und ihn so führt, dass er einen Pipettiereinsatz aus der Abgabestelle der Zufuhrvorrichtung entnimmt und ihn gegen den Stopfen des Probegefässes drückt und dadurch ihn mindestens teilweise in den Stopfen einführt,
(d) eine in der Einpresseinrichtung enthaltene Schlageinrichtung, mit der nach der mindestens teilweise Einführung des Pipettiereinsatzes in den Stopfen, mindestens einen Schlag des Druckdorns auf den Pipettiereinsatz durchführbar ist, und
(e) eine Steuereinrichtung zur Steuerung aller oben erwähnten Einrichtungen.

Der mit der Erfindung erzielte Vorteil besteht insbesondere darin, dass durch sie sichergestellt wird, dass jeder Pipettiereinsatz vollständig in den Stopfen eines Probegefässes eingesetzt wird, und dass dies unabhängig von der Beschaffenheit des Materials des Stopfens erzielt wird.

In einer bevorzugten Ausführungsform der erfindungsgemässen Vorrichtung führt die Einpresseinrichtung den Druckdorn so, dass dessen Spitze in einen Hohlraum eines an der Abgabestelle gebrachten Pipettiereinsatzes eingeführt wird und dadurch diesen aus der Abgabestelle der Zufuhrvorrichtung entnimmt.

Eine weitere bevorzugte Ausführungsform der erfindungsgemässen Vorrichtung enthält ferner eine Niveau-Fühleinrichtung, mit der die Höhe des oberen Endes des Pipettiereinsatzes mit einem vorgegebenen Grenzwert verglichen wird. Eine bevorzugte Variante dieser Ausführungsform ist so eingerichtet, dass die Schlageinrichtung mindestens einen Schlag des Druckdorns auf den Pipettiereinsatz bewirkt, bis mit der Niveau-Fühleinrichtung festgestellt wird, dass die Höhe des oberen Endes des Pipettiereinsatzes kleiner oder gleich als der vorgegebenen Grenzwert ist.

Ein Ausführungsbeispiel der Erfindung wird im folgenden anhand der beiliegenden Zeichnungen beschrieben. Es zeigen:
- Fig.1 bis 4: schematische Querschnitte einer erfindungsgemässen Vorrichtung zur Einführung eines Pipettiereinsatzes 11 in den Stopfen 14 eines Probegefässes 13, wobei die Einpresseinrichtung 55 in verschiedenen Positionen dargestellt wird,
- Fig. 5 und 6: eine schematische Darstellung der Einzugsvorrichtung 51 in Figuren 1-4, wobei einzelne Teile in verschiedenen Positionen gezeigt werden,
- Fig. 7: ein Probegefäss 13, einen Pipettiereinsatz 11 und eine Pipettiernadel 19,
- Fig. 8: eine Druntersicht einer zweiten Ausführungsform eines Pipettiereinsatzes 11,
- Fig. 9: einen Querschnitt der Ausführungsform gemäss Fig. 8 durch die Linie VI-VI,
- Fig. 10: eine Draufsicht der Ausführungsform gemäss der Figuren 8 und 9,
- Fig. 11: einen schematischen Querschnitt des Pipettiereinsatzes 11 gemäss Figuren 8-10 mit einem darin eingeführten Druckdorn 41,
- Fig. 12: einen schematischen Querschnitt der Einführung der Ausführungsform des Pipettiereinsatzes 11 gemäss Figuren 8-10 durch den Stopfen 14 eines Probegefässes 13 mittels des Druckdorns 41,
- Fig. 13: einen schematischen Querschnitt des gemäss Fig. 12 eingesetzten Pipettiereinsatzes 11 nach der Entfernung des Druckdorns 41, und
- Fig. 14: einen schematischen Querschnitt des gemäss Fig. 12 eingesetzten Pipettiereinsatzes 11, dessen Spitze 17 mit einer Pipettiernadel 19 zur Entnahme einer Probe durchgestochen wird.
- Fig. 15: einen Querschnitt einer Variante der Ausführungsform des Pipettiereinsatzes gemäss Figuren 8-10.

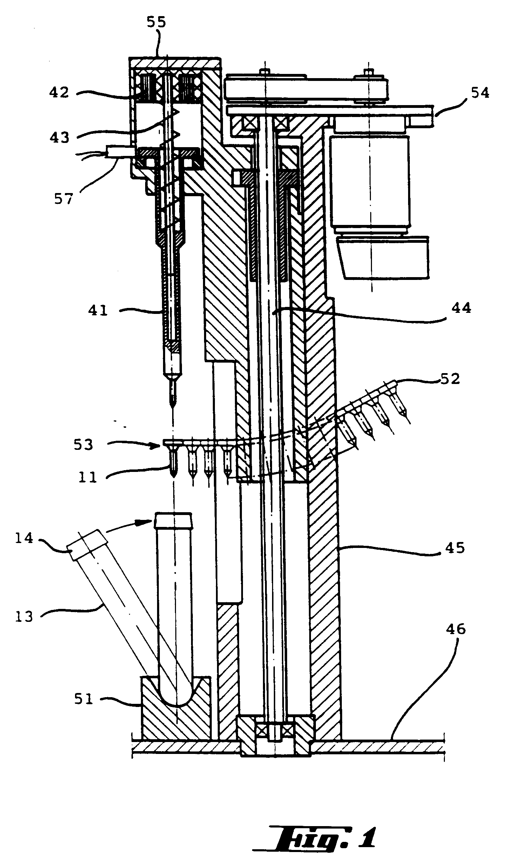

Fig. 1 zeigt einen schematischen Querschnitt einer erfindungsgemässen Vorrichtung zur Einführung eines Pipettiereinsatzes 11 in den Stopfen 14 eines Probegefässes 13, das eine Probe enthält.

Das Probegefäss 13 ist z.B. ein Vakuumgefäss, das eine Probe enthält. Der Stopfen kann z.B. aus Kunstgummi oder Silikongummi, oder aus einem Material mit ähnlichen Eigenschaften wie Gummi sein.

Die Vorrichtung gemäss Fig. 1 enthält u.a. eine Einzugseinrichtung 51 zur Aufnahme und Positionierung des Probegefässes 13, eine Zufuhreinrichtung 52, die einzelne Pipettiereinsätze 11 nacheinander zu einer Abgabestelle 53 bringt, und eine von einer Antriebseinrichtung 54 bewegbare Einpressvorrichtung 55, die einen Druckdorn 41 enthält, mit dem einen Pipettiereinsatz aus der Abgabestelle 53 entnommen und in den Stopfen 14 eines in der Einzugseinrichtung enthaltenen Probegefässes eingeführt wird.

Im Betrieb führt die Einpresseinrichtung den Druckdorn vorzugsweise so, dass dessen Spitze in einen Hohlraum (in Fig. 9 mit Bezugszeichen 21 markiert) eines an der Abgabestelle 53 gebrachten Pipettiereinsatzes 11 eingeführt wird und dadurch diesen aus der Abgabestelle der Zufuhreinrichtung 52 entnimmt und ihn gegen den Stopfen 14 des Probegefässes 13 drückt und dadurch ihn in den Stopfen einführt. Danach zieht die Einpresseinrichtung 55 den Druckdorn 41 aus dem Pipettiereinsatz 11 heraus.

Eine bevorzugte Ausführungssform der Vorrichtung gemäss Fig. 1 enthält ausserdem eine dort nicht gezeigte Niveau-Fühleinrichtung, mit der die Höhe des oberen Endes des Pipettiereinsatzes 11 mit einem vorgegebenen Grenzwert verglichen wird, und eine in der Einpressvorrichtung 55 enthaltene Schlageinrichtung 42, 43, die nachdem der Druckdorn 41 aus dem Hohlraum 21 des Pipettiereinsatzes 11 herausgezogen ist, mindestens einen Schlag des Druckdorns auf den Pipettiereinsatz bewirkt, bis mit der Niveau-Fühleinrichtung festgestellt wird, dass die Höhe des oberen Endes des Pipettiereinsatzes kleiner oder gleich als der vorgegebenen Grenzwert ist. Die Niveau-Fühleinrichtung enthält einen Sensor 57, der z.B. ein induktiver oder optoelektronischer Sensor sein kann.

Die Vorrichtung gemäss Fig. 1 enthält ferner eine dort nicht gezeigte Steuereinrichtung zur Steuerung aller oben erwähnten Einrichtungen.

Die Einpresseinrichtung 55 wird von einer motorgetriebenen Antriebseinrichtung 54 entlang einer Spindel 44 geführt, die zwischen dem oberen Ende einer Säule 45 und eine Platte 46 angeordnet ist.

Die in der Einpresseinrichtung 55 enthaltene Schlageinrichtung besteht im wesentlich aus einem im oberen Teil des Innenraums der Einpresseinrichtung 55 angeordneten Elektromagneten 42 und einer zwischen diesem Elektromagneten und dem Druckdorn 41 angeordneten Feder 43.

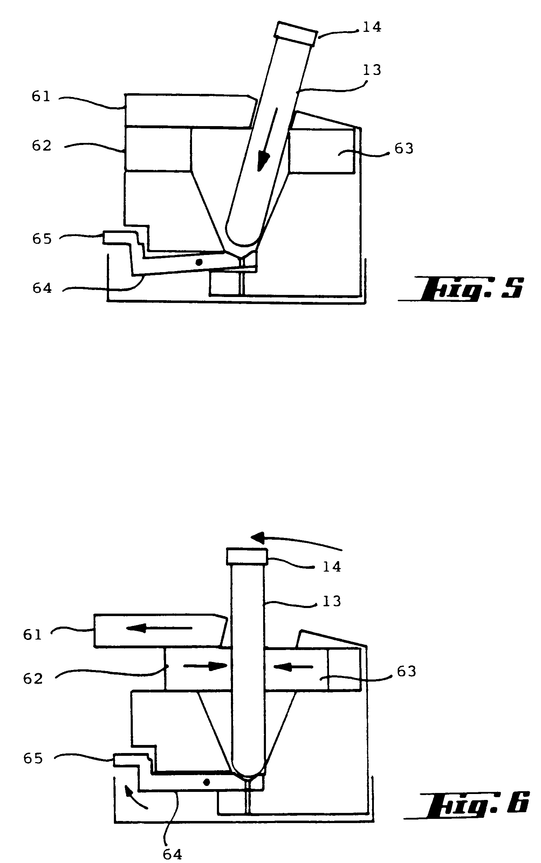

Figuren 5 und 6 zeigen schematisch den Aufbau und die Funktionsweise der Einzugseinrichtung 51 in den Figuren 1-4. Diese Einrichtung hat bewegliche Teile 61, 62, 63 und einen Hebel 64. Mit diesen Teilen in den in Fig. 5 gezeigten Stellungen wird ein Probegefäss 13 in die Einzugseinrichtung manuell eingeführt. Das Gewicht des Probegefässes drückt ein Ende des Hebels 64 und bewegt dadurch das andere Ende 65 des Hebels nach oben, so dass dieses Ende eine Lichtschranke unterbricht. Durch diese Unterbrechung wird ein Signal erzeugt, das entsprechende in den Figuren 5 und 6 nicht gezeigte Antriebsmittel veranlasst, die mit Pfeilen angedeuteten Bewegungen der Teile 61, 62, 63 zu bewirken. Dadurch wird das Probegefäss aufgerichtet und in senkrechter Lage angeordnet.

Die Fig. 1 zeigt die Vorrichtung mit der Einpresseinrichtung 55 in ihrer obersten Lage und zu einem Zeitpunkt, zu dem in der Zufuhreinrichtung 52 ein Pipettiereinsatz 11 zur Abgabestelle 53 gebracht worden ist und in der Einzugseinrichtung ein Probegefäss 13 in senkrechter Lage angeordnet worden ist.

Sobald sich das Röhrchen 13 die senkrechte Lage einnimmt, fährt die Einpresseinrichtung 55 abwärts. Dabei entnimmt den Druckdorn 41 der Einpresseinrichtung 55 zunächst einen Pipettiereinsatz 11 aus der Abgabestelle 53 der Zufuhreinrichtung 52, wobei die Spitze des Druckdorns in einen Hohlraum des Pipettiereinsatzes eingeführt wird.

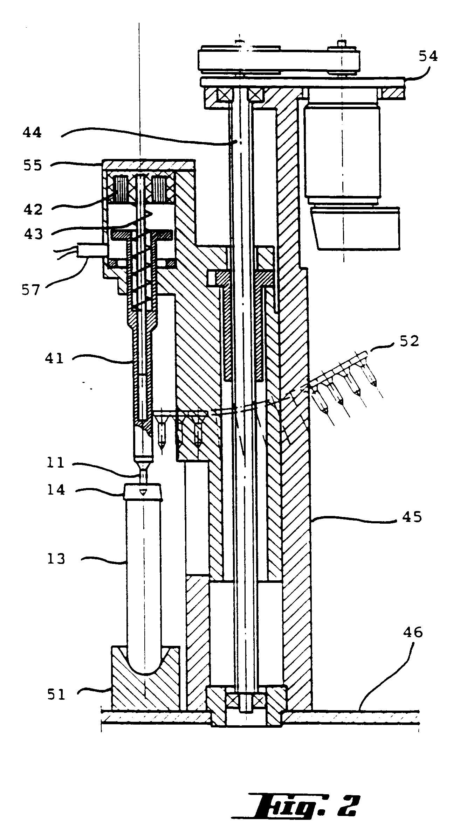

Bei der weiterer Fahrt nach unten erreicht der auf der Spitze des Druckdorns 41 aufgeschobenen Pipettiereinsatz 11 den Stopfen 14 des Probegefässes 13. Der Druckdorn 41 drückt dann den Pipettiereinsatz gegen den Stopfen 14 des Probegefässes 13, um ihn in den Stopfen einzuführen. Durch diesen Druckvorgang wird gleichzeitig die Feder 43 in der Einpresseinrichtung 55 zusammengedrückt. Die Fig. 2 zeigt die Lage der Einpressvorrichtung 55 und des Druckdorns 41 am zu Beginn dieses Druckvorgangs.

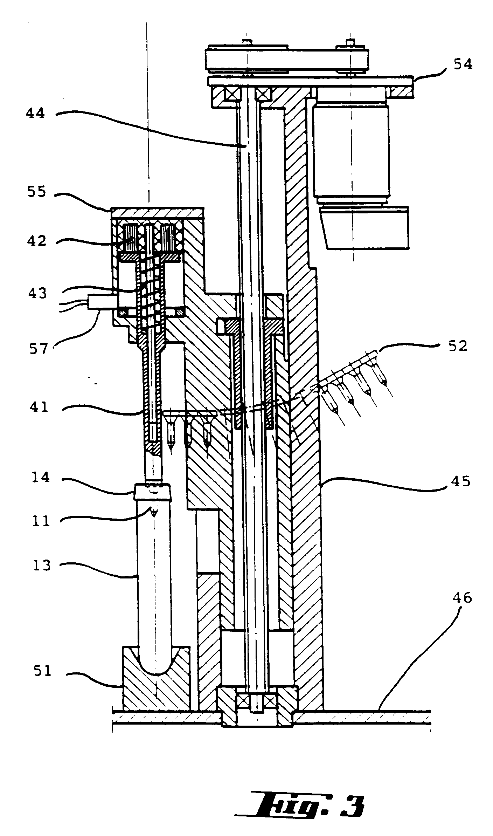

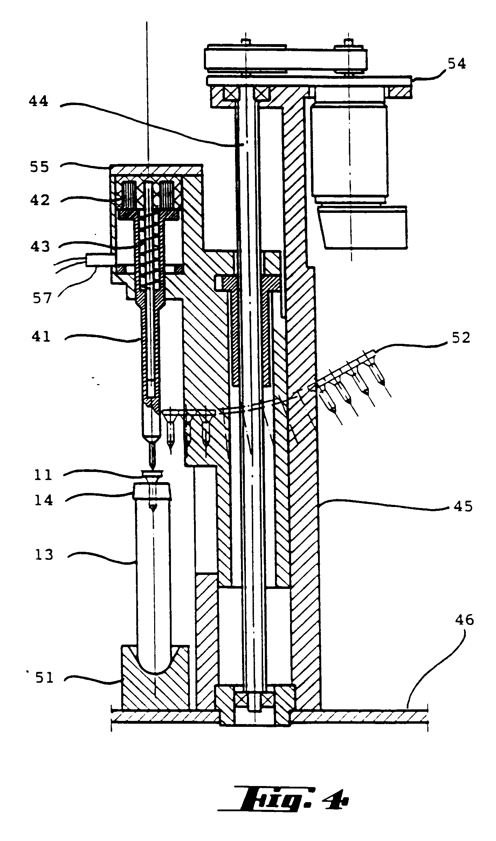

Die Einpressvorrichtung 55 und dadurch der Druckdorn 41 werden bei der Abwärtsbewegung so weit nach unten gefahren, bis der Pipettiereinsatz so tief wie möglich im Stopfen 14 eingepresst ist, und die in Fig. 3 gezeigten Lage einnimmt. In dieser Lage wird die grösste, vorgesehene Spannung der Feder 43 erreicht und das obere Ende des Druckdorns 41 liegt unmittelbar neben dem Elektromagneten 42. Zu diesem Zeitpunkt wird dem Elektromagneten 42 eine Spannung angelegt, die ausreichend gross ist, damit er den Druckdorn 41 gegen die von der gespannten Feder 43 ausgeübten Kraft in der in Fig. 3 gezeigten Lage in der Einpresseinrichtung 55 halten kann. Unmittelbar danach wird die Einpresseinrichtung 55 hochgefahren und dadurch wird der Druckdorn 41 aus dem im Stopfen 14 verbleibenden Pipettiereinsatz 11 herausgezogen. Wie aus Fig. 4 ersichtlich, bleibt dabei der Druckdorn 41 vom Elektromagnet 42 gehalten.

Unmittelbar nach Erreichen des in Fig. 4 dargestellten Betriebszustandes wird die dem Elektromagneten 42 angelegten Spannung gleich Null gemacht. Dadurch gibt der Elektromagnet 42 den Druckdorn 41 frei, die Feder 43 expandiert schlagartig und der Druckdorn 41 wird mit der Vorspannkraft der Feder 43 in den Pipettiereinsatz 11 geschlagen.

In einer bevorzugten Ausführungsform wird nach diesem Vorgang mit dem Sensor 57 und die mit ihm verbundenen Niveau-Fühleinrichtung festgestellt, ob der Pipettiereinsatz ausreichend tief im Stopfen eingesetzt ist. Ist dies nicht der Fall wird der ganze Vorgang , d.h. Ausübung von einer Druckkraft mit dem Druckdorns 41 auf den Pipettiereinsatz 11 gefolgt vom soeben beschriebenen Schlag, wiederholt, bis der Pipettiereinsatz 11 die vorbestimmte Lage im Stopfen 14 einnimmt und behält.

Zur Feststellung der Lage eines in einem Stopfen 14 eingesetzten Pipettiereinsatzes 11 wird die Einpresseinrichtung 55 von der in Fig. 1 gezeigten Stellung nach unten bewegt und in den Hohlraum des Pippettiereinsatzes eingeführt. Dabei wird mit dem Sensor 57 den Zeitpunkt erfasst, zu dem eine Aufwärtsbewegung des oberen Teils des Druckdorns 41 beginnt. Wenn diese Aufwärtsbewegung beginnt, bevor die Einpresseinrichtung 55 eine vorbestimmte Strecke zurückgelegt hat, wird durch die Niveau-Fühlanordnung festgestellt und signalisiert, dass der Pipettiereinsatz 11 nicht ausreichend tief im Stopfen 14 eingesetzt ist. Durch ein entsprechendes Ausgangssignal der Niveau-Fühlanordnung wird dann die Wiederholung des Einpressvorgangs und Schlags ausgelöst.

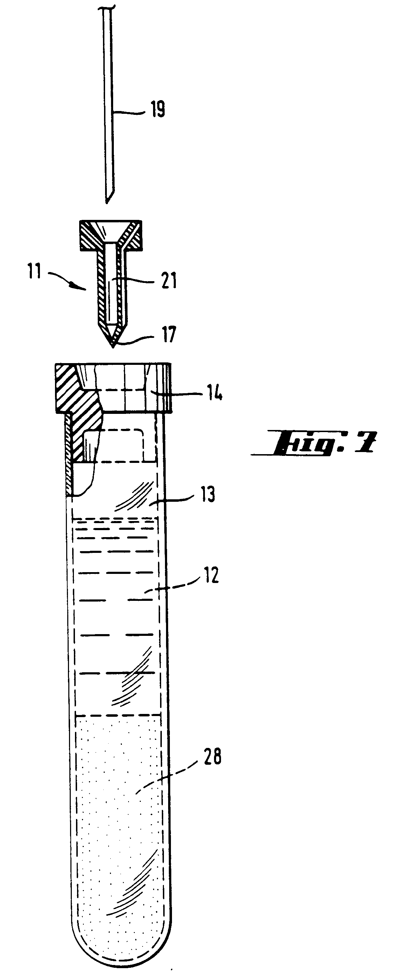

Mit der erfindungsgemässen Vorrichtung können verschiedene Ausführungsformen von Pipettiereinsätzen in die Stopfen von Probegefässen eingesetzt werden. Damit können z.B. Pipettiereinsätze gemäss der EP-A0 269 561 eingesetzt werden, die einen beiderseitig offenen, rohrförmigen Durchgang für die Einführung einer Pipettiernadel in das Probegefäss haben. Mit der erfindungsgemässen Vorrichtung können aber auch nachstehend anhand der Figuren 7-15 beschriebene Pipettiereinsätze eingesetzt werden, die einen einseitig offenen, rohrförmigen Hohlraum 21 haben, dessen geschlossenes Ende 17 mit einer Pipettiernadel durchstechbar ist. Solche Pipettiereinsätze sind in den Figuren 1-4 schematisch dargestellt und nachstehend anhand der Figuren 7-15 beschrieben.

Wie anhand der Figur 7 gezeigt, dient ein Pipettiereinsatz 11 als Bindeglied zwischen einer Pipettiernadel 19 einer in Figur 1 nicht gezeigten Pipettiervorrichtung und einem Probegefäss 13, das z.B. ein Vakuumgefäss ist, das eine Blutprobe enthält und mit einem Gummistopfen 14 luftdicht verschlossen ist. Die Blutprobe besteht z.B. aus einem flüssigen Teil 12 und einem festen Teil 28, die voneinander durch Zentrifugierung getrennt worden sind. Zur Entnahme einer bestimmten Menge der flüssigen Probe 12 wird zuerst der Pipettiereinsatz 11 mittels der oben beschriebenen, aber in Figur 7 nicht gezeigten Vorrichtung durch den Stopfen 14 eingeführt, bis seine Spitze sich im inneren Raum des Probegefässes 13 befindet. Danach wird die Pipettiernadel 19 durch eine Bohrung 21 des Pipettiereinsatzes 11 in das Probegefäss 13 eingeführt, wobei die Wand an der Spitze 17 des Pipettiereinsatzes 11 mit der Nadel 19 durchgestochen wird.

Der Pipettiereinsatz 11 wird durch Spritzgiessen eines geeigneten Kunststoffs hergestellt. Dieser Kunststoff muss einerseits hart genug sein, damit der Pipettiereinsatz 11 beim Durchstechen des Stopfens 14 intakt bleibt, er muss andererseits weich genug sein, damit die Spitze 17 des Pipettiereinsatzes mit einer gewöhnlichen Pipettiernadel 19 leicht durchstochen werden kann. Ein für die Herstellung des Pipettiereinsatzes 11 geeigneter Kunststoff ist z.B. Polyethylen, insbesondere das sogenannte High Density Polyethylene (HDPE), das auch mit Niederdruck Polyethylen (NDPE) oder Hartpolyethylen bezeichnet wird.

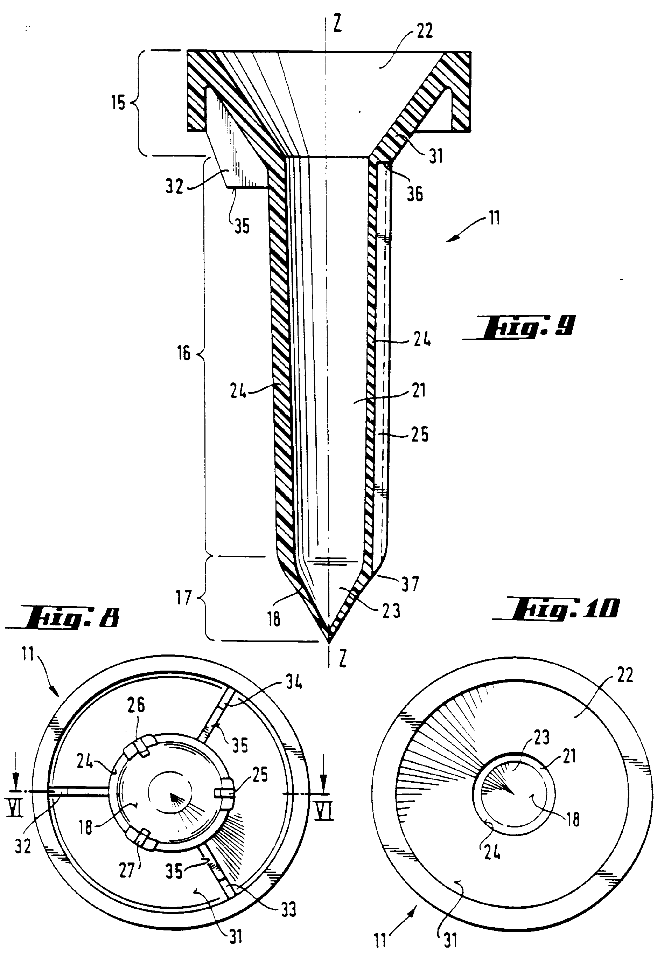

Eine erste Ausführungsform eines Pipettiereinsatzes 11 wird nun anhand der Figuren 8-10 beschrieben. Die Figur 8 zeigt eine Druntersicht dieser Ausführungsform. Die Figur 9 zeigt einen Querschnitt dieser Ausführungsform durch die Linie VI-VI in Figur 8. Die Figur 10 zeigt eine Draufsicht dieser Ausführungsform.

Wie aus Figur 9 ersichtlich, hat der Pipettiereinsatz 11 einen länglichen Körper, der an einem Ende einen kegelförmigen Teil 15 und am anderen Ende eine hohle Spitze 17 hat. Die Spitze 17 ist durch eine kegelförmige Wand 18 gebildet, die mit einer Pipettiernadel durchstechbar ist. Der längliche Körper des Pipettiereinsatzes 11 hat einen mittleren, rohrförmigen Teil 16, der sich zwischen dem kegelförmigen Teil 15 und der Spitze 17 erstreckt.

Der mittlere Teil 16 des Pipettiereinsatzes 11 hat eine Bohrung 21, die sich entlang der Längsachse Z-Z erstreckt und den Innenraum 22 des kegelförmigen Teils 15 mit dem Innenraum 23 der hohlen Spitze 17 verbindet. Der mittlere Teil 16 des Pipettiereinsatzes hat eine Aussenwand 24, die mindestens einen Verbindungskanal 25 enthält, der sich im wesentlichen zwischen dem kegelförmigen Teil 15 und der Spitze 17 erstreckt und dessen Querschnitt wesentlich kleiner als der Querschnitt der Bohrung 21 ist. Der Verbindungskanal 25 hat ein oberes Ende 36 und ein unteres Ende 37. Der Pipettiereinsatz 11 hat vorzugsweise mindestens zwei solche Verbindungskanäle, die um die Längsachse Z-Z des Pipettiereinsatzes symmetrisch angeordnet sind. Die Ausführungsform gemäss Figuren 8-10 hat drei solche Verbindungskanäle 25,26,27, die um die Längsachse Z-Z des Pipettiereinsatzes symmetrisch angeordnet sind. Wie aus Figuren 8 und 9 ersichtlich ist jeder dieser Verbindungskanäle als eine Rille in der Aussenwand 24 ausgebildet. Ueber den mittleren Teil 16 des Pipettiereinsatzes verlaufen diese Rillen vorzugsweise im wesentlichen parallel zur Längsachse Z-Z des Pipettier einsatzes.

Wie nachstehend im Detail beschrieben wird, dienen die Verbindungskanäle 25,26,27 zur Herstellung eines Druckausgleichs zwischen dem Innenraum des verschlossenen Vakuumröhrchens 13 und der Luft ausserhalb des Röhrchens. Der Querschnitt der Verbindungskanäle 25,26,27 wird so klein gewählt, dass beim Druckausgleichvorgang ein Entweichen der Probe aus dem Probegefäss durch diese Verbindungskanäle ausgeschlossen ist.

Die Dicke der Wand 18 der Spitze 17 des Pipettiereinsatzes wird so dünn gewählt, dass sie mit einer gewöhnlichen Pipettiernadel leicht durchstechbar ist. Wie in Fig. 13 gezeigt, ist die Dicke der Wand 18 z.B. 0,15 mm.

Die Aussenwand des kegelförmigen Teils 15 des Pipettiereinsatzes hat mindestens einen flügelförmigen Vorsprung 32, der sich in Richtung der Längsachse Z-Z des Körpers erstreckt und ein der Spitze 17 zugewandtes Ende 35 hat. Dieses Ende liegt der Spitze 17 näher als das obere Ende 36 des mindestens einen Verbindungskanal 25, welches obere Ende 36 dem kegelförmigen Teil 15 benachbart ist oder an der Grenze zwischen dem mittleren Teil 16 und dem kegelförmigen Teil 15 liegt.

In einer bevorzugten Ausführungsform hat die Aussenwand 31 des kegelförmigen Teils 15 mindestens zwei der soeben beschriebenen Vorsprünge. Wie aus der Figur 8 ersichtlich, hat die Aussenwand 31 des kegelförmigen Teils 15 drei flügelförmige Vorsprünge 32,33,34, die um die Längsachse Z-Z des Pipettiereinsatzes symmetrisch angeordnet sind.

Durch die relative Lage der Vorsprünge 32-34, die als Abstandshalter dienen, und der Verbindungskanäle 25-27 wird sichergestellt, dass der beabsichtigte Druckausgleichvorgang durch die Verbindungskanäle 25-27 stattfinden kann, und zwar auch dann, wenn der Pipettiereinsatz so tief wie möglich in den Stopfen 14 eingesetzt wird.

Eine typische Verwendung des Pipettiereinsatzes 11 wird nun anhand der Figuren 7 und 11-14 beschrieben.

Zur Entnahme einer bestimmten Menge einer Probe 12, die sich in einem Probegefäss 13 befindet, ist gemäss der in Figur 7 schematisch gezeigten Anordnung vorgesehen, einen Pipettiereinsatz 11 und eine Pipettiernadel 19 einer Pipettiervorrichtung zu verwenden.

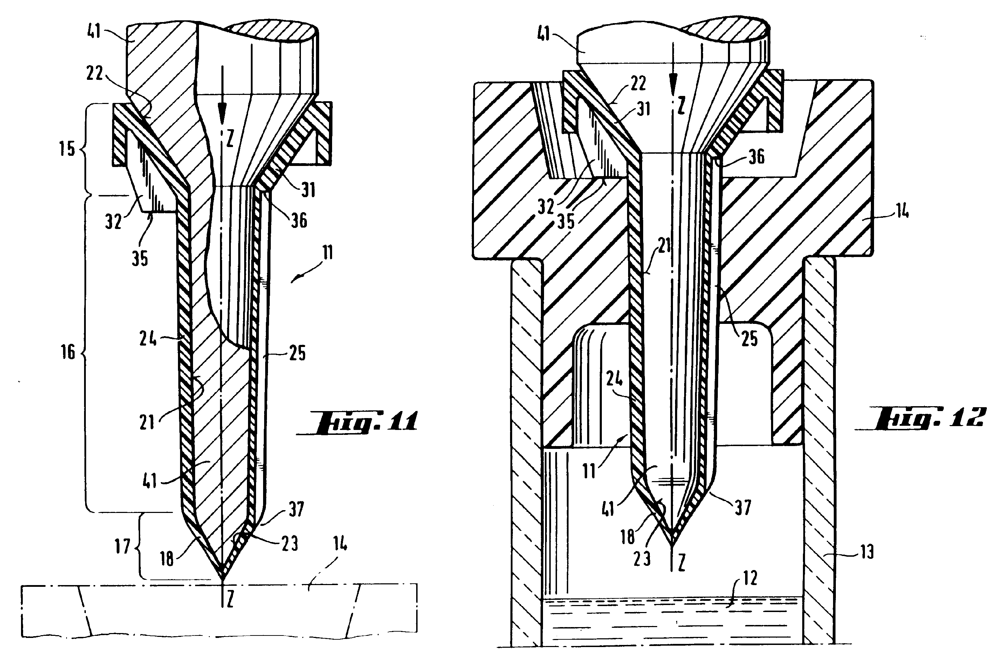

Wie in den Figuren 11 und 12 dargestellt, wird in einem Vorbereitungsschritt für die spätere Probeentnahme ein Pipettiereinsatz 11 mittels der oben anhand der Figuren 1-4 beschriebenen Vorrichtung durch den Stopfen 14 des Probegefässes 13 eingeführt. Hierfür wird zuerst gemäss Figur 11 ein Druckdorn 41 in die Bohrung 21 des Pipettiereinsatzes 11 eingeführt. Wie aus Figur 11 ersichtlich, ist die Form des Druckdorns 41 vorzugsweise sehr genau an der Innenwand des oberen, kegelförmigen Teils des Pipettiereinsatzes 11, an der Innenwand der Bohrung und an der hohlen Spitze im Innenraum des Pipettiereinsatzes 11 angepasst. Vor der Einführung des Pipettiereinsatzes 11 durch den Stopfen 14 des Vakuunmröhrchens 13 wird der Druckdorn 41 in den Pipettiereinsatz eingeführt, bis er dort die in Figur 11 gezeigten Stellung einnimmt.

Zur Einführung des Pipettiereinsatzes 11 in den Stopfen 14 wird der Pipettiereinsatz 11 vom Druckdorn 41 in der durch einen Pfeil angedeuteten Richtung gegen den mittleren Teil des Stopfens 14 gedrückt, bis der Pipettiereinsatz 11 den Stopfen 14 durchsticht und die in Figur 12 gezeigten Stellung einnimmt. Es ist aus der Figur 12 ersichtlich, dass der Vorsprung 32 (und dies gilt auch für die in Figur 12 nicht gezeigten Vorsprünge 33,34) als Abstandshalter dient, durch den sichergestellt ist, dass der mindestens eine Verbindungskanal 25 den Innenraum des Probegefässes 13 mit der Luft ausserhalb des Röhrchens verbindet und somit einen Druckausgleich ermöglicht.

Nach der Einführung des Pipettiereinsatzes 11 in den Stopfen 14 in der soeben beschriebenen Form verbleibt der Pipettiereinsatz 11 im Stopfen 14 in der in Figur 13 gezeigten Stellung. Es ist dabei zu beachten, dass die kegelförmige Wand 18 der Spitze 17 des Pipettiereinsatzes 11 nach seiner Einführung in den Stopfen 14 noch intakt ist und ein Entweichen der Probe aus dem Probegefäss 13 durch die Bohrung 21 verhindert.

Probegefässe 13, die Proben enthalten und die mit einem Pipettiereinsatz 11 in der in Figur 13 gezeigten Stellung versehen sind, sind geschlossene Behälter. Mit solchen Probegefässen können daher die verschiedensten Verfahrensschritte, wie z.B. Zentrifugierung oder ein Schütteln der Probegefässe, durchgeführt werden, ohne ein Entweichen von Probenfragmenten aus den Probegefässen befürchten zu müssen.

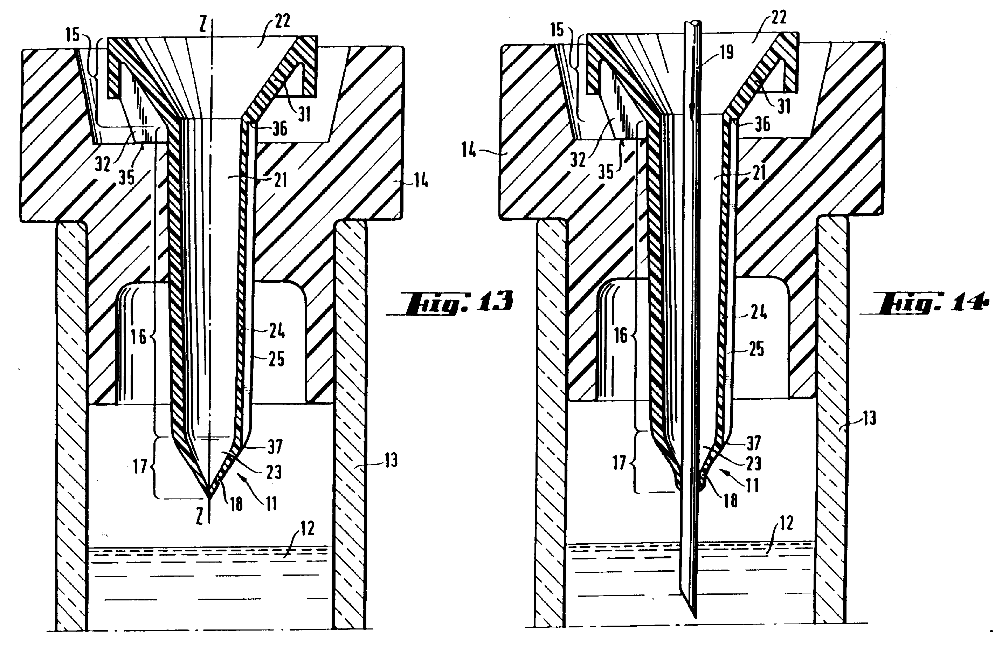

Wie in Figur 14 schematisch dargestellt, wird zur Entnahme einer bestimmten Menge der Probe 12 im Probegefäss 13 eine Pipettiernadel 19 durch die Bohrung 21 des Pipettiereinsatzes 11 in der mit einem Pfeil angedeuteten Richtung eingeführt, bis sie die in Figur 14 gezeigten Stellung einnimmt. Bei dieser Einführung wird die Wand 18 der Spitze 17 des Pipettiereinsatzes 11 durch die Nadel 19 durchgestochen. Nach der Entnahme der Probe wird die Nadel 19 aus dem Probegefäss 13 bzw. aus dem Pipettiereinsatz 11 herausgenommen. Durch den Stich verbleibt in der Wand 18 einen sehr kleinen Schlitz, so dass bei einer normalen Behandlung der Probegefässe ein unerwünschtes Entweichen von Probenfragmenten aus den Probegefässen sehr unwahrscheinlich ist.

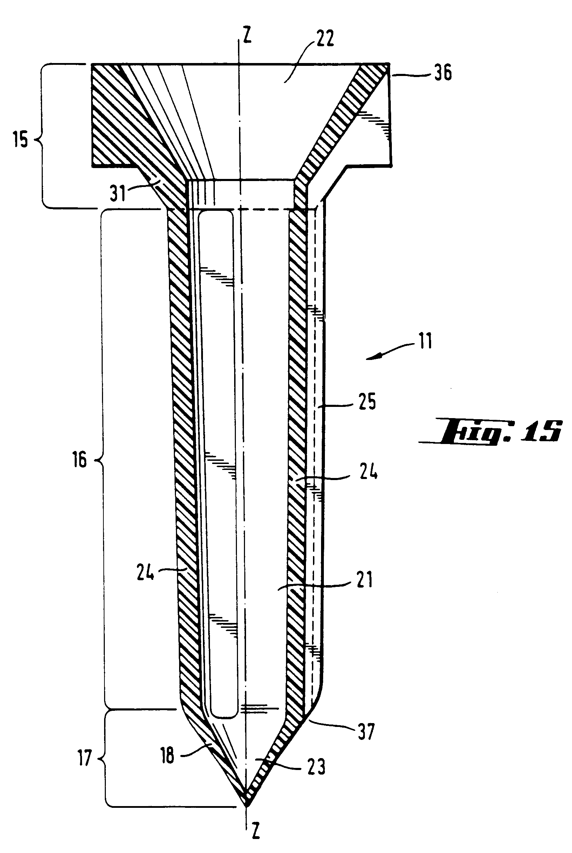

Fig. 15 zeigt einen Querschnitt einer Variante der Ausführungsform gemäss Figuren 8-10. In dieser Variante erstrecken sich die Verbindungskanäle 25, 26, 27 bis zum obersten Rand des kegelförmigen Teils 15 des Pipettiereinsatzes, so dass der Druckausgleich durch die Kanäle 25, 26, 27 auch ohne den Vorsprünge 32, 33, 34 sichergestellt ist. Solche Vorsprünge sind daher in dieser Variante nicht vorgesehen.

Einige Abmessungen des Pipettiereinsatzes 11 sollten vorzugsweise in den nachstehend angegebenen Bereichen liegen: Die Dicke der Wand 24 des mittleren Teils 16 des Pipettiereinsatzes 11 sollte vorzugsweise in einem Bereich zwischen ca. 0,3 mm und ca. 1,0 mm liegen.

Die Dicke des dünnsten Teils der Wand 18 der Spitze 17 des Pipettiereinsatzes 11 sollte vorzugsweise in einem Bereich zwischen ca. 0,1 mm und ca. 0,3 mm liegen.

Der mittlere Durchmesser der Bohrung 21 im mittleren Teil 16 des Pipettiereinsatzes 11 sollte vorzugsweise in einem Bereich zwischen ca. 1,5 mm und ca. 4,0 mm liegen.

Der Durchmesser von jedem der Verbindungskanäle 25, 26, 27 entlang der Aussenwand 24 des Pipettiereinsatzes 11 sollte vorzugsweise in einem Bereich zwischen ca. 0,1 mm und ca. 0,5 mm liegen.

## Patentansprüche

1. Vorrichtung zur automatischen Einführung eines Pipettiereinsatzes (11) durch den Stopfen (14) eines damit verschlossenen Probegefässes(13), das eine Probe enthält, welche Vorrichtung folgende Komponenten enthält:
(a) eine Einzugseinrichtung (51),die einzelne, mit einem Stopfen (14) verschlossene Probegefässe (13) nacheinander aufnimmt und in einer vorbestimmten Lage positioniert,
(b) eine Zufuhreinrichtung (52), die einzelne Pipettiereinsätze (11) nacheinander zu einer Abgabestelle (53) bringt,
(c) eine von einer Antriebseinrichtung (54) bewegbare Einpresseinrichtung (55), die einen Druckdorn (41), enthält und ihn so führt, dass er einen Pipettiereinsatz (11) aus der Abgabestelle der Zufuhrvorrichtung (52) entnimmt und ihn gegen den Stopfen (14) des Probegefässes (13) drückt und dadurch ihn mindestens teilweise in den Stopfen einführt,
(d) eine in der Einpresseinrichtung (55) enthaltene Schlageinrichtung (42, 43), mit der nach der mindestens teilweisen Einführung des Pipettiereinsatzes (11) in den Stopfen (14), mindestens ein Schlag des Druckdorns (41) auf den Pipettiereinsatz (11) durchführbar ist, und
(e) eine Steuereinrichtung zur Steuerung aller oben erwähnten Einrichtungen.

2. Vorrichtung gemäss Anspruch 1, dadurch gekennzeichnet, dass die Einpresseinrichtung (55) den Druckdorn (41), so führt, dass dessen Spitze in einen Hohlraum (21) eines an die Abgabestelle (53) gebrachten Pipettiereinsatzes (11) eingeführt wird und dadurch diesen aus der Abgabestelle (53) der Zufuhrvorrichtung (52) entnimmt.

3. Vorrichtung gemäss einem der vorangehenden Ansprüchen 1-2, dadurch gekennzeichnet, dass sie ferner eine Niveau-Fühleinrichtung enthält, mit der die Höhe des oberen Endes des Pipettiereinsatzes (11) mit einem vorgegebenen Grenzwert verglichen wird.

4. Vorrichtung gemäss Anspruch 3, dadurch gekennzeichnet, dass sie so eingerichtet ist, dass die Schlageinrichtung (42, 43) mindestens einen Schlag des Druckdorns (41) auf den Pipettiereinsatz (11) bewirkt, bis mit der Niveau-Fühleinrichtung festgestellt wird, dass die Höhe des oberen Endes des Pipettiereinsatzes (11) kleiner oder gleich als der vorgegebenen Grenzwert ist.

## Claims

1. Apparatus for the automatic introduction of a pipetting insert (11) through the stopper (14) of a sample vessel (13) sealed therewith and containing a sample, which apparatus comprises the following components:
(a) an entry device (51) which receives successively individual sample vessels (13) sealed by a stopper (14) and positions them in a predetermined position,
(b) a feed means (52) which successively brings individual pipetting inserts (11) to a delivery station (53),
(c) a press-in means (55) which is movable by a drive means (54) and which comprises a plunger (41) and guides it such that it takes a pipetting insert (11) from the delivery station of the feed means (52) and presses it against the stopper (14) of the sample vessel (13) and thus introduces it at least partially into the stopper,
(d) a percussion means (42,43) which is contained in the press-in means (55) and by means of which, after at least partial introduction of the pipetting insert (11) into the stopper (14), it is possible to apply at least one impact by the plunger (41) to the pipetting insert (11), and
(e) a control means for controlling all the above means.

2. Apparatus according to claim 1, characterized in that the press-in means (55) guides the plunger (41) such that its point is introduced into a cavity (21) in a pipetting insert (11) brought to the delivery station (53) and thus removes this from the delivery station (53) of the feed means (52).

3. Apparatus according to claim 1 or 2, characterized in that it also comprises a level-sensing means with which the height of the top end of the pipetting insert (11) is compared with a predetermined limiting value.

4. Apparatus according to claim 3, characterized in that it is arranged such that the percussion means (42,43) applies at least one impact by the plunger (41) to the pipetting insert (11) until the level-sensing means detects that the height of the top end of the pipetting insert (11) is lower than or equal to the predetermined limiting value.

## Revendications

1. Dispositif d'introduction automatique d'une pièce d'insertion pour pipette (11) à travers les bouchons (14) d'un récipient d'échantillonnage ainsi fermé (13) contenant un échantillon, le dispositif contenant les composants suivants:
(a) un appareil d'introduction (51) qui prend successivement les divers récipients d'échantillonnage (13) fermés avec un bouchon (14) et qui les positionne en un emplacement prédéterminé,
(b) un appareil d'amenée (52) qui amène les diverses pièces d'insertion pour pipette (11) en une position de décharge (53),
(c) un appareil de pressage (55) pouvant se mouvoir sous l'action d'un appareil de commande (54) qui contient une broche de pressage (41) et la conduit de manière à prélever une pièce d'insertion pour pipette (11) dans la position de décharge de l'appareil d'amenée (52) et à la presser contre le bouchon (14) du récipient d'échantillonnage (13) et ainsi à l'introduire au moins en partie dans les bouchons,
(d) un appareil de frappe (42, 43) contenu dans l'appareil de pressage (55), avec lequel après introduction au moins partielle de la pièce d'insertion pour pipette (11) dans les bouchons (14), on peut frapper au moins un coup de la broche de pressage (41) sur la pièce d'insertion pour pipette (11), et
(e) un appareil de commande pour commander tous les appareils mentionnés ci-dessus.

2. Dispositif selon la revendication 1, caractérisé en ce que l'appareil de pressage (55) conduit la broche de pressage (41) de manière que sa pointe soit introduite dans une cavité (21) d'une pièce d'insertion pour pipette (11) amenée à la position de décharge (53) et ainsi à ce que cette pièce puise à la position de décharge (53) de l'appareil d'amenée (52).

3. Dispositif selon l'une des revendications 1-2 précédentes, caractérisé en ce qu'il contient en outre un appareil de détection du niveau avec lequel on compare la hauteur de l'extrémité supérieure de la pièce d'insertion pour pipette (11) avec une valeur limite préindiquée.

4. Dispositif selon la revendication 3, caractérisé en ce qu'il est réglé de manière que l'appareil de frappe (42, 43) déclenche au moins un coup de la broche de pressage (41) sur la pièce d'insertion pour pipette (11) jusqu'à ce qu'il soit établi avec l'appareil de détection du niveau que la hauteur de l'extrémité supérieure de la pièce d'insertion pour pipette est inférieure ou égale à la valeur limite préalablement indiquée.
